# EUROPEAN PATENT APPLICATION

(11) **EP 4 432 591 A1**
(43) Date of publication of application: **18.09.2024**
(21) Application number: 22897765.8
(22) Date of filing: 21.11.2022
(51) Int. Cl.: H04L 5/00, H04W 72/04

(54) **COMMUNICATION METHOD AND APPARATUS**

(30) Priority: 25.11.2021 CN 202111415159
(71) Applicant: Huawei Technologies Co., Ltd., Shenzhen, Guangdong 518129 (CN)
(72) Inventor: ZHANG, Liwen, Shenzhen, Guangdong 518129 (CN); XU, Zhou, Shenzhen, Guangdong 518129 (CN); ZHU, Hong, Shenzhen, Guangdong 518129 (CN)
(74) Representative: Gill Jennings & Every LLP
(86) International application number: PCT/CN2022/133275
(87) International publication number: WO 2023/093682

(57) **Abstract**

This application provides a communication method and apparatus, to reduce resource overheads and avoid a conflict between frequency domain resources of different carriers. The method includes: A network device sends a first signal to a first terminal device in a first frequency band and a second frequency band. A frequency band of a first carrier includes the first frequency band and the second frequency band, the first frequency band and the second frequency band are contiguous, and the first carrier is a carrier of a first cell accessed by the first terminal device. The network device sends a second signal to a second terminal device in a third frequency band. A frequency band of a second carrier includes the third frequency band and the second frequency band, the second frequency band and the third frequency band are contiguous, a root sequence for generating the first signal is the same as a root sequence for generating the second signal, a slot for sending the first signal is the same as a slot for sending the second signal, and the second carrier is a carrier of a second cell accessed by the second terminal device.

## Description

This application claims priority to Chinese Patent Application No. 202111415159.6, filed with China National Intellectual Property Administration on November 25, 2021 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

The 3rd generation partnership project (3rd generation partnership project, 3GPP) standard defines a maximum bandwidth of a single carrier. For example, a single carrier of time division duplexing (time division duplexing, TDD) new radio (new radio, NR) may support a maximum bandwidth of 100 MHz, and a single carrier of frequency division duplexing (frequency division duplexing, FDD) NR may support a maximum bandwidth of 50 MHz.

Currently, each carrier is an independent cell, and each carrier is configured with an independent measurement channel, including a sounding reference signal (sounding reference signal, SRS) channel, a channel state information-reference signal (channel state information-reference signal, CSI-RS) channel, a tracking reference signal (tracking reference signal, TRS) channel, a physical downlink control channel (physical downlink control channel, PDCCH), and the like. Frequency domain bandwidths of the SRS channel, the CSI-RS channel, and the TRS channel are usually configured as a full bandwidth of a carrier, to ensure that all users on each carrier can obtain a signal measurement result of the full bandwidth.

To obtain signal quality measurement on the full bandwidth of the carrier, measurement of the SRS channel, the CSI-RS channel, and the TRS channel is usually configured as full-bandwidth carrier measurement. Therefore, spectrum overlapping exists in a multi-carrier scenario, and SRS/CSI-RS/TRS channels of two carriers may conflict in frequency domain.

### SUMMARY

This application provides a communication method and apparatus, to reduce resource overheads and avoid a conflict between frequency domain resources of different carriers.

According to a first aspect, a communication method is provided. The method may be performed by a network device, or may be performed by a chip or a chip system on a network device side. The method includes: A network device sends a first signal to a first terminal device in a first frequency band and a second frequency band. A frequency band of a first carrier includes the first frequency band and the second frequency band, the first frequency band and the second frequency band are contiguous, and the first carrier is a carrier of a first cell accessed by the first terminal device. The network device sends a second signal to a second terminal device in a third frequency band. A frequency band of a second carrier includes the third frequency band and the second frequency band, the second frequency band and the third frequency band are contiguous, a root sequence for generating the first signal is the same as a root sequence for generating the second signal, a slot for sending the first signal is the same as a slot for sending the second signal, and the second carrier is a carrier of a second cell accessed by the second terminal device.

Based on the foregoing solution, when a frequency domain resource of the first carrier and a frequency domain resource of the second carrier overlap, the network device needs to send a reference signal only once in an overlapping frequency band, and the reference signal sent in the overlapping frequency band may be received and shared by the first terminal device of the first carrier and the second terminal device of the second carrier, to reduce resource overheads and improve channel measurement precision.

With reference to the first aspect, in some implementations of the first aspect, the first signal includes a channel state information-reference signal CSI-RS or a tracking reference signal TRS. The second signal includes a channel state information-reference signal CSI-RS or a tracking reference signal TRS.

According to a second aspect, a communication method is provided. The method may be performed by a terminal device, or may be performed by a chip or a chip system on a terminal device side. The method includes: A second terminal device receives a first signal from a network device in a second frequency band. A frequency band of a first carrier includes the second frequency band, and the first carrier is a carrier of a first cell accessed by a first terminal device. The second terminal device receives a second signal from the network device in a third frequency band. A frequency band of a second carrier includes the second frequency band and the third frequency band, a root sequence for generating the first signal is the same as a root sequence for generating the second signal, the second frequency band and the third frequency band are contiguous, a slot for receiving the first signal is the same as a slot for receiving the second signal, and the second carrier is a carrier of a second cell accessed by the second terminal device.

With reference to the second aspect, in some implementations of the second aspect, the first signal includes a channel state information-reference signal CSI-RS or a tracking reference signal TRS. The second signal includes a channel state information-reference signal CSI-RS or a tracking reference signal TRS.

According to a third aspect, a communication method is provided. The method may be performed by a network device, or may be performed by a chip or a chip system on a network device side. The method includes: A network device sends a first signal to a first terminal device on a first time-frequency resource. The first time-frequency resource is a time-frequency resource of a first carrier, and the first carrier is a carrier of a first cell accessed by the first terminal device. The network device sends a second signal to a second terminal device on a second time-frequency resource. The second time-frequency resource is a time-frequency resource of a second carrier, the second carrier is a carrier of a second cell accessed by the second terminal device, and the first time-frequency resource and the second time-frequency resource are different time-frequency resources.

Based on the foregoing technical solution, the first time-frequency resource used by the first carrier and the second time-frequency resource used by the second carrier are different in time domain, or the first time-frequency resource used by the first carrier and the second time-frequency resource used by the second carrier are different in frequency domain, so that a conflict between frequency domain resources of different carriers can be avoided, to improve channel measurement precision.

With reference to the third aspect, in some implementations of the third aspect, a slot in which the first time-frequency resource is located is different from a slot in which the second time-frequency resource is located.

With reference to the third aspect, in some implementations of the third aspect, a frequency domain occupied by the first time-frequency resource is different from a frequency domain occupied by the second time-frequency resource.

With reference to the third aspect, in some implementations of the third aspect, the first signal includes a channel state information-reference signal CSI-RS or a tracking reference signal TRS. The second signal includes a channel state information-reference signal CSI-RS or a tracking reference signal TRS.

According to a fourth aspect, a communication method is provided. The method may be performed by a network device, or may be performed by a chip or a chip system on a network device side. The method includes: A network device sends a first signal to a first terminal device on a first time-frequency resource. The first time-frequency resource is a time-frequency resource of a first carrier, and the first carrier is a carrier of a first cell accessed by the first terminal device. The network device sends a second signal to a second terminal device on a second time-frequency resource. The second time-frequency resource is a time-frequency resource of a second carrier, and the second carrier is a carrier of a second cell accessed by the second terminal device. When utilization of the first time-frequency resource is less than a first threshold and utilization of the second time-frequency resource is greater than a second threshold, the network device reduces a bandwidth of the first time-frequency resource and increases a bandwidth of the second time-frequency resource.

Based on the foregoing technical solution, when resource utilization of the first time-frequency resource of the first carrier is less than the first threshold, and resource utilization of the second time-frequency resource of the second carrier is greater than the second threshold, the bandwidth of the first time-frequency resource may be reduced, and the bandwidth of the second time-frequency resource may be increased. Therefore, in this solution, time-frequency resources of different carriers can be flexibly allocated.

With reference to the fourth aspect, in some implementations of the fourth aspect, the first time-frequency resource is a time-frequency resource of a first physical downlink control channel PDCCH, and the second time-frequency resource is a time-frequency resource of a second PDCCH.

With reference to the fourth aspect, in some implementations of the fourth aspect, the first threshold is determined based on a failure ratio of a first PDCCH control channel element CCE and load of the first PDCCH. The second threshold is determined based on a failure ratio of a second PDCCH control channel element CCE and load of the second PDCCH.

According to a fifth aspect, a communication apparatus is provided. The apparatus may be used in the network device according to the first aspect, and the apparatus includes: a sending unit, configured to send a first signal to a first terminal device in a first frequency band and a second frequency band. A frequency band of a first carrier includes the first frequency band and the second frequency band, the first frequency band and the second frequency band are contiguous, and the first carrier is a carrier of a first cell accessed by the first terminal device. The sending unit is further configured to send a second signal to a second terminal device in a third frequency band. A frequency band of a second carrier includes the third frequency band and the second frequency band, the second frequency band and the third frequency band are contiguous, a root sequence for generating the first signal is the same as a root sequence for generating the second signal, a slot for sending the first signal is the same as a slot for sending the second signal, and the second carrier is a carrier of a second cell accessed by the second terminal device.

With reference to the fifth aspect, in some implementations of the fifth aspect, the first signal includes a channel state information-reference signal CSI-RS or a tracking reference signal TRS. The second signal includes a channel state information-reference signal CSI-RS or a tracking reference signal TRS.

According to a sixth aspect, a communication apparatus is provided. The apparatus may be used in the second terminal device according to the second aspect. The apparatus includes: a receiving unit, configured to receive a first signal from a network device in a second frequency band. A frequency band of a first carrier includes the second frequency band, and the first carrier is a carrier of a first cell accessed by a first terminal device. The receiving unit is further configured to receive a second signal from the network device in a third frequency band. A frequency band of a second carrier includes the second frequency band and the third frequency band, a root sequence for generating the first signal is the same as a root sequence for generating the second signal, the second frequency band and the third frequency band are contiguous, a slot for receiving the first signal is the same as a slot for receiving the second signal, and the second carrier is a carrier of a second cell accessed by a second terminal device.

With reference to the sixth aspect, in some implementations of the sixth aspect, the first signal includes a channel state information-reference signal CSI-RS or a tracking reference signal TRS. The second signal includes a channel state information-reference signal CSI-RS or a tracking reference signal TRS.

According to a seventh aspect, a communication apparatus is provided. The apparatus may be used in the network device according to the third aspect, and the apparatus includes: a sending unit, configured to send a first signal to a first terminal device on a first time-frequency resource. The first time-frequency resource is a time-frequency resource of a first carrier, and the first carrier is a carrier of a first cell accessed by the first terminal device. The sending unit is further configured to send a second signal to a second terminal device on a second time-frequency resource. The second time-frequency resource is a time-frequency resource of a second carrier, the second carrier is a carrier of a second cell accessed by the second terminal device, and the first time-frequency resource and the second time-frequency resource are different time-frequency resources.

With reference to the seventh aspect, in some implementations of the seventh aspect, a slot in which the first time-frequency resource is located is different from a slot in which the second time-frequency resource is located.

With reference to the seventh aspect, in some implementations of the seventh aspect, a frequency domain occupied by the first time-frequency resource is different from a frequency domain occupied by the second time-frequency resource.

With reference to the seventh aspect, in some implementations of the seventh aspect, a resource element RE occupied by the first time-frequency resource is different from an RE occupied by the second time-frequency resource.

With reference to the seventh aspect, in some implementations of the seventh aspect, the first signal includes a channel state information-reference signal CSI-RS or a tracking reference signal TRS. The second signal includes a channel state information-reference signal CSI-RS or a tracking reference signal TRS.

According to an eighth aspect, a communication apparatus is provided. The apparatus may be used in the network device according to the fourth aspect, and the apparatus includes: a sending unit, configured to send a first signal to a first terminal device on a first time-frequency resource, where the first time-frequency resource is a time-frequency resource of a first carrier, and the first carrier is a carrier of a first cell accessed by the first terminal device, where the sending unit is further configured to send a second signal to a second terminal device on a second time-frequency resource, where the second time-frequency resource is a time-frequency resource of a second carrier, and the second carrier is a carrier of a second cell accessed by the second terminal device; and a processing unit, configured to: when utilization of the first time-frequency resource is less than a first threshold and utilization of the second time-frequency resource is greater than a second threshold, reduce a bandwidth of the first time-frequency resource and increase a bandwidth of the second time-frequency resource.

With reference to the eighth aspect, in some implementations of the eighth aspect, the first time-frequency resource is a time-frequency resource of a first physical downlink control channel PDCCH, and the second time-frequency resource is a time-frequency resource of a second PDCCH.

With reference to the eighth aspect, in some implementations of the eighth aspect, the first threshold is determined based on a failure ratio of a first PDCCH control channel element CCE and load of the first PDCCH. The second threshold is determined based on a failure ratio of a second PDCCH control channel element CCE and load of the second PDCCH.

According to a ninth aspect, a communication device is provided, including a processor and a transceiver. The transceiver is configured to: receive computer code or instructions, and transmit the computer code or the instructions to the processor. The processor runs the computer code or the instructions, to implement the method according to any possible implementation of any one of the foregoing aspects.

According to a tenth aspect, a communication device is provided, including an input/output interface and a logic circuit. The input/output interface is configured to obtain input information and/or output information. The logic circuit is configured to perform the method according to any possible implementation of any one of the foregoing aspects, to perform processing based on the input information, and/or generate output information.

According to an eleventh aspect, a computer-readable storage medium is provided. The computer-readable storage medium stores a computer program, and when the computer program is executed by a communication apparatus, the communication apparatus is enabled to implement the method according to any possible implementation of any one of the foregoing aspects.

According to a twelfth aspect, a computer program product including instructions is provided. When the instructions are executed by a computer, a communication apparatus is enabled to implement the method according to any possible implementation of any one of the foregoing aspects.

### BRIEF DESCRIPTION OF DRAWINGS

FIG. 1 is a diagram of a system architecture to which an embodiment of this application is applicable;
FIG. 2 is a diagram of an unequal contiguous high bandwidth that exceeds a bandwidth of 100 MHz;
FIG. 3 is a diagram of an unequal contiguous high bandwidth that exceeds a bandwidth of 50 MHz;
FIG. 4 is a schematic interaction flowchart of a communication method according to an embodiment of this application;
FIG. 5 is a diagram of sending a reference signal according to an embodiment of this application;
FIG. 6 is a schematic flowchart of another communication method according to an embodiment of this application;
FIG. 7 is a diagram of a time-frequency resource with staggered REs;
FIG. 8 is a schematic flowchart of another communication method according to an embodiment of this application;
FIG. 9 to FIG. 12 are block diagrams of a communication apparatus according to an embodiment of this application; and
FIG. 13 is a block diagram of a communication device according to an embodiment of this application.

### DESCRIPTION OF EMBODIMENTS

The following describes technical solutions of this application with reference to accompanying drawings.

Embodiments of this application are applied to various communication systems, for example, a wireless local area network (wireless local area network, WLAN) system, a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a long term evolution (long term evolution, LTE) system, a satellite communication system, a 5th generation (5th generation, 5G) system, and a new communication system emerging in the future.

The communication system to which this application is applicable includes one or more transmitters and one or more receivers. Signal transmission between the transmitter and the receiver may be performed by using a radio wave, or may be performed by using transmission media such as visible light, a laser, infrared light, and an optical fiber.

For example, one of the transmitter and the receiver may be a terminal device, and the other may be a network device. For example, both the transmitter and the receiver may be terminal devices.

The terminal device in embodiments of this application may include various handheld devices, vehicle-mounted devices, wearable devices, or computing devices that have a wireless communication function, or other processing devices connected to a wireless modem. A terminal may be a mobile station (mobile station, MS), a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, or the like. The user equipment includes vehicle user equipment.

For example, the network device may be an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (a home evolved NodeB or a home NodeB, HNB), a baseband unit (baseband unit, BBU), an access point (access point, AP) in a wireless fidelity (wireless fidelity, WI-FI) system, a wireless relay node, a wireless backhaul node, a transmission point (transmission point, TP), or a transmission and reception point (transmission and reception point, TRP); may be a gNB or a transmission point (for example, a TRP or a TP) in new radio (new radio, NR), or one antenna panel or one group of antenna panels (including a plurality of antenna panels) of a base station in NR; or may be a network node that forms a gNB or a transmission point, for example, a baseband unit (building baseband unit, BBU) or a distributed unit (distributed unit, DU). Alternatively, the network device may be a vehicle-mounted device, a wearable device, a network device in a 5G network, a network device in a future evolved PLMN network, or the like. This is not limited.

The network device has abundant product forms. For example, in a product implementation process, a BBU and a radio frequency unit (radio frequency unit, RFU) may be integrated in a same device, and the device is connected to an antenna array by using a cable (for example, but not limited to, a feeder). The BBU and the RFU may alternatively be disposed separately, are connected by using an optical fiber, and communicate with each other by using, for example but not limited to a common public radio interface (common public radio interface, CPRI) protocol. In this case, the RFU is usually referred to as a remote radio unit (remote radio unit, RRU), and is connected to the antenna array through a cable. In addition, the RRU may alternatively be integrated with the antenna array. For example, this structure is used for an active antenna unit (active antenna unit, AAU) product in a current market.

In addition, the BBU may be further divided into a plurality of parts. For example, the BBU may be further divided into a central unit (central unit, CU) and a distributed unit (distributed unit, DU) based on real-time performance of a processed service. The CU is responsible for processing a non-real-time protocol and service, and the DU is responsible for processing a physical layer protocol and a real-time service. Further, some physical layer functions may be separated from the BBU or the DU and integrated into the AAU.

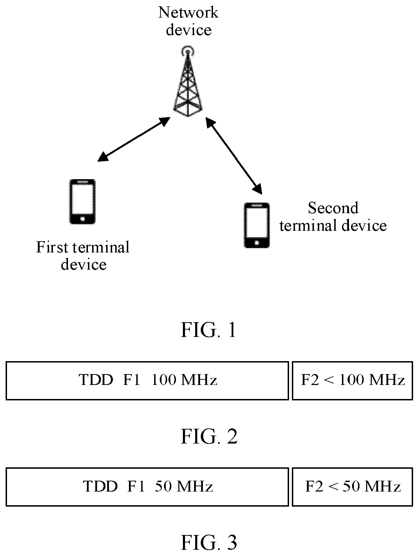

FIG. 1 is a diagram of a system architecture to which an embodiment of this application is applicable. The system includes a network device, a first terminal device, and a second terminal device. The network device in this embodiment of this application may be a base station. The first terminal device may be a terminal device that accesses a first cell, the second terminal device may be a terminal device that accesses a second cell, and the first cell and the second cell may be different cells controlled by the network device.

The 3rd generation partnership project (3rd generation partnership project, 3GPP) standard defines a maximum bandwidth of a single carrier. For example, a single carrier of time division duplexing (time division duplexing, TDD) new radio (new radio, NR) may support a maximum bandwidth of 100 MHz, and a single carrier of frequency division duplexing (frequency division duplexing, FDD) NR may support a maximum bandwidth of 50 MHz. However, a large quantity of operators may actually obtain a high-bandwidth spectrum that exceeds a single-carrier bandwidth range. FIG. 2 shows a diagram of an unequal contiguous high bandwidth that exceeds a bandwidth of 100 MHz. FIG. 3 shows a diagram of an unequal contiguous high bandwidth that exceeds a bandwidth of 50 MHz. In this scenario, an operator usually configures multi-carriers with overlapping spectrums, to increase a user-perceived rate on the multi-carriers.

Currently, each carrier is an independent cell, and each carrier is configured with an independent measurement channel, including a channel state information-reference signal (channel state information-reference signal, CSI-RS) channel, a tracking reference signal (tracking reference signal, TRS) channel, a physical downlink control channel (physical downlink control channel, PDCCH), and the like. Frequency domain bandwidths of the CSI-RS channel and the TRS channel are usually configured as a full bandwidth of a carrier, to ensure that all users on each carrier can obtain a signal measurement result of the full bandwidth.

To obtain signal quality measurement on the full bandwidth of the carrier, measurement of the CSI-RS channel and the TRS channel is usually configured as full-bandwidth carrier measurement. Therefore, spectrum overlapping exists in a multi-carrier scenario, and SRS/CSI-RS/TRS channels of two carriers may conflict in frequency domain.

Resource utilization of the PDCCH channel is closely related to uplink and downlink service types and user signal quality. Either a large quantity of small-packet users or cell-edge users cause high PDCCH utilization and insufficient control channel element (control channel element, CCE) resources. Consequently, the PDCCH resource utilization does not match physical downlink shared channel (physical downlink shared channel, PDSCH) resource utilization. In the multi-carrier scenario, a bandwidth of a traffic channel or a PDSCH channel is greater than that of the PDCCH channel. Consequently, there is a control channel resource conflict due to uneven resource allocation of frequency domain resources. In addition, the terminal device performs blind detection in search space of the carrier, and cannot dynamically change a frequency domain bandwidth of a PDCCH of each carrier in real time.

In addition, two different cells are distinguished by different modes, and have independent channels. For example, static shared beam (static shared beam, SSB) system broadcasting needs independent broadcast resources allocated by the two cells, and consequently, broadcast overheads are high.

When the spectrum overlapping exists in the multi-carrier scenario, the CSI-RS/TRS channels of the two carriers may conflict in frequency domain. An embodiment of this application provides a communication method. The method can reduce resource overheads and avoid a conflict between frequency domain resources of different carriers.

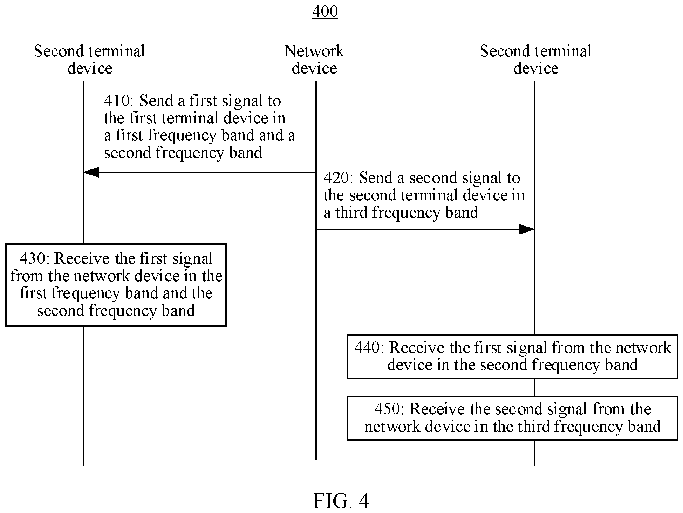

FIG. 4 is a schematic interaction flowchart of a communication method 400 according to an embodiment of this application.

410: A network device sends a first signal to a first terminal device in a first frequency band and a second frequency band, where a frequency band of a first carrier includes the first frequency band and the second frequency band, the first frequency band and the second frequency band are contiguous, and the first carrier is a carrier of a first cell accessed by the first terminal device.

For example, the first signal may include a channel state information-reference signal CSI-RS or a tracking reference signal TRS. In other words, the first signal may be a CSI-RS or a TRS, and the first signal may alternatively be another signal.

420: The network device sends a second signal to a second terminal device in a third frequency band, where a frequency band of a second carrier includes the third frequency band and the second frequency band, the second frequency band and the third frequency band are contiguous, the second carrier is a carrier of a second cell accessed by the second terminal device, and the second frequency band is an overlapping frequency band between the first carrier and the second carrier. A root sequence for generating the first signal being the same as a root sequence for generating the second signal may be understood as a scrambling identity (identification, ID) of the first signal being the same as a scrambling identity of the second signal. A slot for sending the first signal being the same as a slot for sending the second signal or a symbol for sending the first signal being the same as a symbol for sending the second signal may be understood that the first signal and the second signal are sent at the same time.

For example, the second signal may include a channel state information-reference signal CSI-RS or a tracking reference signal TRS. In other words, the second signal may be a CSI-RS or a TRS, and the second signal may alternatively be another signal.

Because the network device may control one or more cells, optionally, the network device that sends the first signal to the first terminal device that accesses the first cell and the network device that sends the second signal to the second terminal device that accesses the second cell may be a same network device or may be different network devices. This is not specifically limited in this application.

430: The first terminal device receives the first signal from the network device in the first frequency band and the second frequency band.

440: The second terminal device receives the first signal from the network device in the second frequency band.

450: The second terminal device receives the second signal from the network device in the third frequency band. Because the first signal and the second signal have a same root sequence, the second terminal device cannot perceive a difference between the received first signal and the received second signal.

Optionally, the network device may send the first signal to the first terminal device in the first frequency band, and send the second signal to the second terminal device in the second frequency band and the third frequency band. Accordingly, the first terminal device receives the first signal from the network device in the first frequency band, and receives the second signal from the network device in the second frequency band. Because the first signal and the second signal have the same root sequence, the first terminal device cannot perceive the difference between the received first signal and the received second signal. The second terminal device receives the second signal from the network device in the second frequency band and the third frequency band.

In other words, a signal is sent only once in an overlapping frequency band, and the first terminal device and the second terminal device share the signal in the overlapping frequency band.

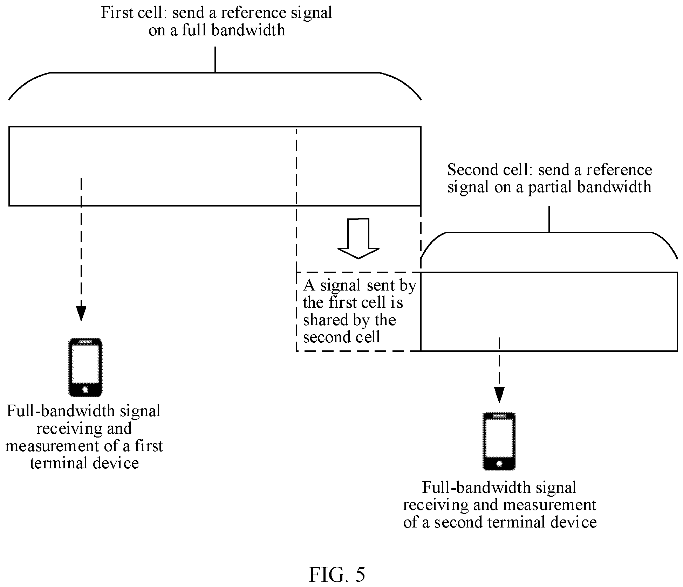

FIG. 5 is a diagram of sending a reference signal according to an embodiment of this application. A full bandwidth that is configured by an operator for a first carrier/first cell and that is used to send a reference signal is 100 MHz, a full bandwidth that is configured for a second carrier/second cell and that is used to send a reference signal is 100 MHz, and an overlapping frequency band between the first carrier and the second carrier is 40 MHz. A non-overlapping frequency band of the first carrier is 60 MHz, and a non-overlapping frequency band of the second carrier is also 60 MHz.

For example, a network device may send a first signal to a first terminal device in a full frequency band range of the first carrier, in other words, the network device sends the first signal in a range of 0 MHz to 100 MHz of the full bandwidth of the first carrier to a first terminal device that accesses the first cell. The network device sends a second signal in a range of 100 MHz to 160 MHz of the non-overlapping frequency band of the second carrier to a second terminal device that accesses the second cell, in other words, the network device sends the second signal to the second terminal device in a partial bandwidth range of the second carrier. Accordingly, the first terminal device receives the first signal from the network device in the range of 0 MHz to 100 MHz. The second terminal device receives the first signal from the network device in a range of 60 MHz to 100 MHz of the overlapping frequency band, and receives the second signal from the network device in the range of 100 MHz to 160 MHz. In other words, the first signal sent to the first terminal device in the overlapping frequency band is shared by the second terminal device.

For example, the network device may send the first signal to the first terminal device in a non-overlapping frequency band range of the first carrier, in other words, the network device sends the first signal in a range of 0 MHz to 60 MHz of the non-overlapping frequency band of the first carrier to the first terminal device that accesses the first cell. The network device sends the second signal in a range of 60 MHz to 160 MHz of the full bandwidth of the second carrier to the second terminal device that accesses the second cell. Accordingly, the first terminal device receives the first signal from the network device in the range of 0 MHz to 60 MHz, and receives the second signal from the network device in the range of 60 MHz to 100 MHz of the overlapping frequency band. The second terminal device receives the second signal from the network device in the range of 60 MHz to 160 MHz. In other words, the second signal sent to the second terminal device in the overlapping frequency band is shared by the first terminal device.

Optionally, the network device needs to periodically detect bandwidth effective statuses of the first cell and the second cell. If a bandwidth range of the first cell is abnormal, the second cell may send a signal based on a full bandwidth. In addition, if CSI-RS/SRS/TRS configuration of the first cell changes, the second cell needs to be notified in time to modify the configuration.

In the technical solution provided in this application, when a frequency domain resource of the first carrier and a frequency domain resource of the second carrier overlap, the network device needs to send a reference signal only once in an overlapping frequency band, and the reference signal sent in the overlapping frequency band may be received and shared by the first terminal device of the first carrier and the second terminal device of the second carrier, to reduce resource overheads and improve channel measurement precision.

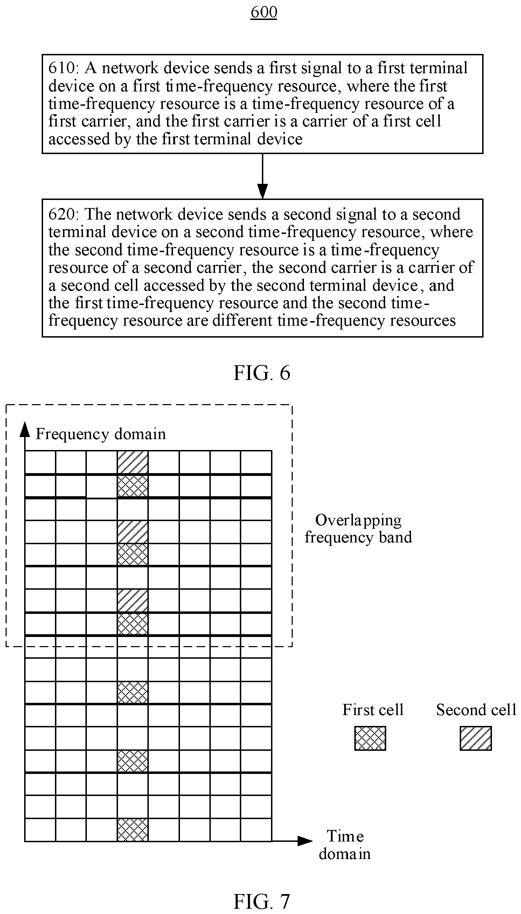

When spectrum overlapping exists in a multi-carrier scenario, SRS/CSI-RS/TRS channels of the two carriers may conflict in frequency domain. An embodiment of this application provides another communication method, to avoid a conflict between frequency domain resources of different carriers. FIG. 6 is a schematic flowchart of another communication method 600 according to an embodiment of this application.

610: A network device sends a first signal to a first terminal device on a first time-frequency resource, where the first time-frequency resource is a time-frequency resource of a first carrier, and the first carrier is a carrier of a first cell accessed by the first terminal device.

Optionally, the first signal may include a channel state information-reference signal CSI-RS or a tracking reference signal TRS. In other words, the first signal may be a CSI-RS or a TRS, and the first signal may alternatively be another signal.

620: The network device sends a second signal to a second terminal device on a second time-frequency resource, where the second time-frequency resource is a time-frequency resource of a second carrier, the second carrier is a carrier of a second cell accessed by the second terminal device, and the first time-frequency resource and the second time-frequency resource are different time-frequency resources.

Optionally, the second signal may include a channel state information-reference signal CSI-RS or a tracking reference signal TRS. In other words, the second signal may be a CSI-RS or a TRS, and the second signal may alternatively be another signal.

For example, a slot in which the first time-frequency resource is located may be different from a slot in which the second time-frequency resource is located. When a frequency domain resource of the first carrier and a frequency domain resource of the second carrier overlap, a slot of the first carrier may be staggered with a slot (slot) of the second carrier. The first signal of the first cell and the second signal of the second cell are sent in different slots, so that it can be ensured that the first signal and the second signal that are sent in an overlapping frequency band do not collide.

Because the network device may control one or more cells, optionally, the network device that sends the first signal to the first terminal device that accesses the first cell and the network device that sends the second signal to the second terminal device that accesses the second cell may be a same network device or may be different network devices. This is not specifically limited in this application.

When the network device that sends the first signal to the first terminal device that accesses the first cell and the network device that sends the second signal to the second terminal device that accesses the second cell are different network devices, for example, the network device that sends the first signal to the first terminal device is a first network device, and the network device that sends the second signal to the second terminal device is a second network device, when the first network device sends the first signal on the first time-frequency resource, the second network device cannot send the second signal on the first time-frequency resource. To avoid resource collision, optionally, the first network device may send indication information to the second network device. The indication information indicates that the second network device cannot send the second signal on the first time-frequency resource.

For example, a frequency domain occupied by the first time-frequency resource may be different from a frequency domain occupied by the second time-frequency resource.

In an implementation, a resource element (resource element, RE) occupied by the first time-frequency resource may be different from an RE occupied by the second time-frequency resource. Each carrier can be configured with a plurality of REs in a same RB. Therefore, optionally, an RB occupied by the first time-frequency resource and an RB occupied by the second time-frequency resource may overlap, but the RE occupied by the first time-frequency resource and the RE occupied by the second time-frequency resource are staggered.

FIG. 7 is a diagram of a time-frequency resource with staggered REs. In an overlapping frequency band between a first carrier and a second carrier, an RE used to send a first signal to a first terminal device that access a first cell is different from an RE used to send a second signal to a second terminal device that accesses a second cell, to avoid a conflict between a time-frequency resource used to send the first signal and a time-frequency resource used to send the second signal.

In the technical solution provided in this embodiment of this application, a first time-frequency resource used by the first carrier and a second time-frequency resource used by the second carrier are different in time domain, or a first time-frequency resource used by the first carrier and a second time-frequency resource used by the second carrier are different in frequency domain, so that a conflict between frequency domain resources of different carriers can be avoided, to improve channel measurement precision.

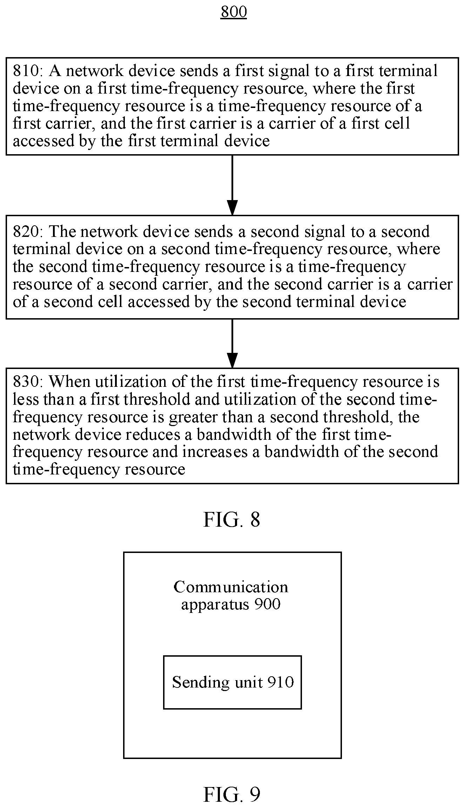

When spectrum overlapping exists in a multi-carrier scenario, a bandwidth of a traffic channel is greater than that of a PDCCH channel. Consequently, there is a control channel resource conflict due to uneven resource allocation on frequency domain resources. An embodiment of this application provides another communication method, to flexibly allocate multi-carrier control channel resources. FIG. 8 is a schematic flowchart of another communication method 800 according to an embodiment of this application.

810: A network device sends a first signal to a first terminal device on a first time-frequency resource, where the first time-frequency resource is a time-frequency resource of a first carrier, and the first carrier is a carrier of a first cell accessed by the first terminal device. Accordingly, the first terminal device receives the first signal from the network device on the first time-frequency resource.

Optionally, the first signal may include a channel state information-reference signal CSI-RS or a tracking reference signal TRS. In other words, the first signal may be a CSI-RS or a TRS, and the first signal may alternatively be another signal.

820: The network device sends a second signal to a second terminal device on a second time-frequency resource, where the second time-frequency resource is a time-frequency resource of a second carrier, and the second carrier is a carrier of a second cell accessed by the second terminal device. Accordingly, the second terminal device receives the second signal from the network device on the second time-frequency resource.

Optionally, the second signal may include a channel state information-reference signal CSI-RS or a tracking reference signal TRS. In other words, the second signal may be a CSI-RS or a TRS, and the second signal may alternatively be another signal.

For example, the first time-frequency resource is a time-frequency resource of a first physical downlink control channel PDCCH, and the second time-frequency resource is a time-frequency resource of a second PDCCH.

830: When utilization of the first time-frequency resource is less than a first threshold and utilization of the second time-frequency resource is greater than a second threshold, the network device reduces a bandwidth of the first time-frequency resource and increases a bandwidth of the second time-frequency resource. Alternatively, when utilization of the first time-frequency resource is less than a first threshold, the network device may reduce a bandwidth of the first time-frequency resource.

For example, a bandwidth of the first carrier and a bandwidth of the second carrier overlap, a carrier bandwidth of each carrier is configured as 100 MHz, and an overlapping bandwidth is 40 MHz. APDCCH bandwidth of the first cell is initially configured as 80 MHz, and a quantity of symbols is 1. A PDCCH bandwidth of the second cell is initially configured as 80 MHz, and a quantity of symbols is 1. A control channel coordination module monitors PDCCH load of each carrier. When PDCCH resources of the second cell are insufficient for allocation, it may be determined whether a PDCCH resource of the first cell is idle. If a PDCCH frequency domain resource of the first cell is idle and the resource utilization is lower than the first threshold, the network device may dynamically allocate the PDCCH frequency domain resource of the first cell to the second cell. For example, the PDCCH frequency domain resource of the first cell is reduced, and a PDCCH frequency domain resource of the second cell is increased. A dynamically adjusted PDCCH bandwidth of the first cell is 60 MHz, and a dynamically adjusted PDCCH bandwidth of the second cell is 100 MHz. In addition, if the PDCCH frequency domain resource of the first cell cannot be evenly allocated to the second cell, the quantity of PDCCH symbols of the second cell may be dynamically increased.

For another example, when the PDCCH resource utilization of both cells is low, a quantity of PDCCH symbols of a local cell may be preferentially dynamically reduced, or the PDCCH bandwidths of the two cells may be dynamically changed, so that the PDCCH bandwidth matches a traffic channel of the local cell, to achieve a balance effect.

Optionally, the first threshold may be determined based on a failure ratio of a first PDCCH control channel element (control channel element, CCE) and load of the first PDCCH. The second threshold may be determined based on a failure ratio of a second PDCCH CEE and load of the second PDCCH.

Specifically, when the PDCCH CCE failure ratio of the second cell is greater than a threshold or the load of the second PDCCH is greater than a threshold, the second cell may apply to the first cell for a time-frequency resource. If the PDCCH CCE failure ratio of the first cell is less than the threshold and the PDCCH load of the first cell is also less than the threshold, the first cell may allocate an idle time-frequency resource to the second cell. A size of the idle time-frequency resource may alternatively be determined based on the PDCCH CCE failure ratio of the second cell and load of the second PDCCH of the second cell.

In the technical solution provided in this embodiment of this application, when the resource utilization of the first time-frequency resource of the first carrier is less than the first threshold, and the resource utilization of the second time-frequency resource of the second carrier is greater than the second threshold, the bandwidth of the first time-frequency resource may be reduced, and the bandwidth of the second time-frequency resource may be increased. Therefore, in this solution, time-frequency resources of different carriers can be flexibly allocated.

Different cells are distinguished by different modes, and have independent channels. For example, SSB system broadcasting needs independent broadcast resources allocated by two cells, and consequently, broadcast overheads are high. In this embodiment of this application, broadcast resources of two different cells are shared. For example, a same broadcast resource is allocated by the first cell and the second cell. If the network device broadcasts a message to the first terminal device that accesses the first cell, the second terminal device that accesses the second cell may also receive, on the broadcast resource, the broadcast message broadcast by the network device, to reduce the broadcast overheads.

An embodiment of this application provides a communication apparatus. FIG. 9 is a schematic block diagram of a communication apparatus 900 according to an embodiment of this application. The apparatus may be used in the network device in embodiments of this application. The communication apparatus 900 includes the following.

A sending unit 910 is configured to send a first signal to a first terminal device in a first frequency band and a second frequency band. A frequency band of a first carrier includes the first frequency band and the second frequency band, the first frequency band and the second frequency band are contiguous, and the first carrier is a carrier of a first cell accessed by the first terminal device.

The sending unit 910 is further configured to send a second signal to a second terminal device in a third frequency band. A frequency band of a second carrier includes the third frequency band and the second frequency band, the second frequency band and the third frequency band are contiguous, a root sequence for generating the first signal is the same as a root sequence for generating the second signal, a slot for sending the first signal is the same as a slot for sending the second signal, and the second carrier is a carrier of a second cell accessed by the second terminal device.

Optionally, the first signal includes a channel state information-reference signal CSI-RS or a tracking reference signal TRS. The second signal includes a channel state information-reference signal CSI-RS or a tracking reference signal TRS.

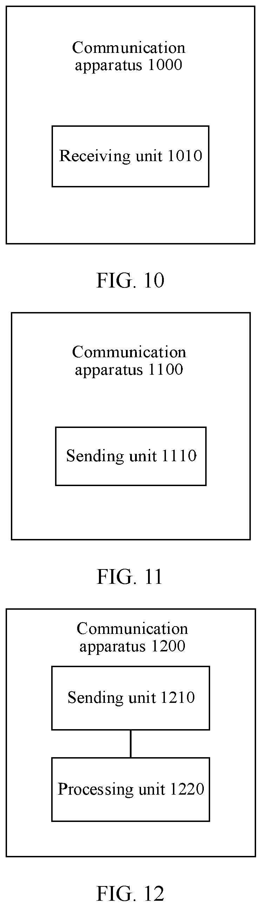

An embodiment of this application provides a communication apparatus. FIG. 10 is a schematic block diagram of a communication apparatus 1000 according to an embodiment of this application. The apparatus may be used in the second terminal device in embodiments of this application. The communication apparatus 1000 includes the following.

A receiving unit 1010 is configured to receive a first signal from a network device in a second frequency band. A frequency band of a first carrier includes the second frequency band, and the first carrier is a carrier of a first cell accessed by a first terminal device.

The receiving unit 1010 is further configured to receive a second signal from the network device in a third frequency band. A frequency band of a second carrier includes the second frequency band and the third frequency band, a root sequence for generating the first signal is the same as a root sequence for generating the second signal, the second frequency band and the third frequency band are contiguous, a slot for receiving the first signal is the same as a slot for receiving the second signal, and the second carrier is a carrier of a second cell accessed by a second terminal device.

Optionally, the first signal includes a channel state information-reference signal CSI-RS or a tracking reference signal TRS. The second signal includes a channel state information-reference signal CSI-RS or a tracking reference signal TRS.

An embodiment of this application provides a communication apparatus. FIG. 11 is a schematic block diagram of a communication apparatus 1100 according to an embodiment of this application. The apparatus may be used in the network device in embodiments of this application. The communication apparatus 1100 includes the following.

The sending unit 1110 is configured to send a first signal to a first terminal device on a first time-frequency resource. The first time-frequency resource is a time-frequency resource of a first carrier, and the first carrier is a carrier of a first cell accessed by the first terminal device.

The sending unit 1110 is further configured to send a second signal to a second terminal device on a second time-frequency resource. The second time-frequency resource is a time-frequency resource of a second carrier, the second carrier is a carrier of a second cell accessed by the second terminal device, and the first time-frequency resource and the second time-frequency resource are different time-frequency resources.

Optionally, a slot in which the first time-frequency resource is located is different from a slot in which the second time-frequency resource is located.

Optionally, a frequency domain occupied by the first time-frequency resource is different from a frequency domain occupied by the second time-frequency resource.

Optionally, a resource element RE occupied by the first time-frequency resource is different from an RE occupied by the second time-frequency resource.

Optionally, the first signal includes a channel state information-reference signal CSI-RS or a tracking reference signal TRS. The second signal includes a channel state information-reference signal CSI-RS or a tracking reference signal TRS.

An embodiment of this application provides a communication apparatus. FIG. 12 is a schematic block diagram of a communication apparatus 1200 according to an embodiment of this application. The apparatus may be used in the network device in embodiments of this application. The communication apparatus 1200 includes the following.

A sending unit 1210 is configured to send a first signal to a first terminal device on a first time-frequency resource. The first time-frequency resource is a time-frequency resource of a first carrier, and the first carrier is a carrier of a first cell accessed by the first terminal device.

The sending unit 1210 is further configured to send a second signal to a second terminal device on a second time-frequency resource. The second time-frequency resource is a time-frequency resource of a second carrier, and the second carrier is a carrier of a second cell accessed by the second terminal device.

A processing unit 1220 is configured to: when utilization of the first time-frequency resource is less than a first threshold and utilization of the second time-frequency resource is greater than a second threshold, reduce a bandwidth of the first time-frequency resource and increase a bandwidth of the second time-frequency resource.

Optionally, the first time-frequency resource is a time-frequency resource of a first physical downlink control channel PDCCH, and the second time-frequency resource is a time-frequency resource of a second PDCCH.

Optionally, the first threshold is determined based on a failure ratio of a first PDCCH control channel element CCE and load of the first PDCCH. The second threshold is determined based on a failure ratio of a second PDCCH control channel element CCE and load of the second PDCCH.

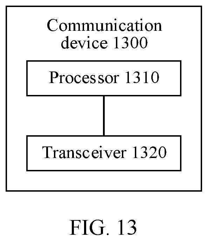

An embodiment of this application provides a communication device 1300. FIG. 13 is a schematic block diagram of a communication device 1300 according to an embodiment of this application.

The communication device 1300 includes a processor 1310 and a transceiver 1320. The transceiver 1320 is configured to: receive computer code or instructions, and transmit the computer code or the instructions to the processor 1310, and the processor 1310 runs the computer code or the instructions, to implement the method in embodiments of this application. The communication device may be the terminal device or the network device in embodiments of this application.

The foregoing processor 1310 may be an integrated circuit chip, and has a signal processing capability. In an implementation process, steps in the foregoing method embodiments may be completed by using a hardware integrated logic circuit in the processor, or by using instructions in a form of software. The foregoing processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly executed and accomplished by using a hardware decoding processor, or may be executed and accomplished by using a combination of hardware and software modules in a decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

Optionally, an embodiment of this application further provides a communication device. The communication device includes an input/output interface and a logic circuit. The input/output interface is configured to obtain input information and/or output information. The logic circuit is configured to perform the method according to any one of the method embodiments, to perform processing based on the input information, and/or generate output information.

An embodiment of this application further provides a computer-readable storage medium. The computer-readable storage medium stores a computer program used to implement the method in the foregoing method embodiments. When the computer program is run on a computer, the computer is enabled to implement the method in the foregoing method embodiments.

An embodiment of this application further provides a computer program product. The computer program product includes computer program code. When the computer program code is run on a computer, the method in the method embodiments is performed.

An embodiment of this application further provides a chip, including a processor. The processor is connected to a memory, the memory is configured to store a computer program, and the processor is configured to execute the computer program stored in the memory, to enable the chip to perform the method in the method embodiments.

It should be understood that, in embodiments of this application, numbers "first", "second", and the like are merely for distinguishing between different objects, for example, to distinguish between different terminal devices, and do not constitute a limitation on the scope of embodiments of this application. Embodiments of this application are not limited thereto.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification usually represents an "or" relationship between associated objects. In this application, the term "at least one" may represent "one" and "two or more". For example, at least one of A, B, and C may represent the following seventh cases: Only A exists, only B exists, only C exists, both A and B exist, both A and C exist, and both C and B exist, and A, B, C all exist.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly learn that, for the purpose of convenient and brief description, for a specific working process of the foregoing system, apparatuses, and units, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a network device, a first signal to a first terminal device in a first frequency band and a second frequency band, wherein a frequency band of a first carrier comprises the first frequency band and the second frequency band, the first frequency band and the second frequency band are contiguous, and the first carrier is a carrier of a first cell accessed by the first terminal device; and
sending, by the network device, a second signal to a second terminal device in a third frequency band, wherein a frequency band of a second carrier comprises the third frequency band and the second frequency band, the second frequency band and the third frequency band are contiguous, a root sequence for generating the first signal is the same as a root sequence for generating the second signal, a slot for sending the first signal is the same as a slot for sending the second signal, and the second carrier is a carrier of a second cell accessed by the second terminal device.

2. The method according to claim 1, wherein
the first signal comprises a channel state information-reference signal CSI-RS or a tracking reference signal TRS; and
the second signal comprises a channel state information-reference signal CSI-RS or a tracking reference signal TRS.

3. A communication method, comprising:
receiving, by a second terminal device, a first signal from a network device in a second frequency band, wherein a frequency band of a first carrier comprises the second frequency band, and the first carrier is a carrier of a first cell accessed by a first terminal device; and
receiving, by the second terminal device, a second signal from the network device in a third frequency band, wherein a frequency band of a second carrier comprises the second frequency band and the third frequency band, a root sequence for generating the first signal is the same as a root sequence for generating the second signal, the second frequency band and the third frequency band are contiguous, a slot for receiving the first signal is the same as a slot for receiving the second signal, and the second carrier is a carrier of a second cell accessed by the second terminal device.

4. The method according to claim 3, wherein
the first signal comprises a channel state information-reference signal CSI-RS or a tracking reference signal TRS; and
the second signal comprises a channel state information-reference signal CSI-RS or a tracking reference signal TRS.

5. A communication method, comprising:
sending, by a network device, a first signal to a first terminal device on a first time-frequency resource, wherein the first time-frequency resource is a time-frequency resource of a first carrier, and the first carrier is a carrier of a first cell accessed by the first terminal device; and
sending, by the network device, a second signal to a second terminal device on a second time-frequency resource, wherein the second time-frequency resource is a time-frequency resource of a second carrier, the second carrier is a carrier of a second cell accessed by the second terminal device, and the first time-frequency resource and the second time-frequency resource are different time-frequency resources.

6. The method according to claim 5, wherein
a slot in which the first time-frequency resource is located is different from a slot in which the second time-frequency resource is located.

7. The method according to claim 5, wherein
a frequency domain occupied by the first time-frequency resource is different from a frequency domain occupied by the second time-frequency resource.

8. The method according to claim 7, wherein
a resource element RE occupied by the first time-frequency resource is different from an RE occupied by the second time-frequency resource.

9. The method according to any one of claims 5 to 8, wherein
the first signal comprises a channel state information-reference signal CSI-RS or a tracking reference signal TRS; and
the second signal comprises a channel state information-reference signal CSI-RS or a tracking reference signal TRS.

10. A communication method, comprising:
sending, by a network device, a first signal to a first terminal device on a first time-frequency resource, wherein the first time-frequency resource is a time-frequency resource of a first carrier, and the first carrier is a carrier of a first cell accessed by the first terminal device;
sending, by the network device, a second signal to a second terminal device on a second time-frequency resource, wherein the second time-frequency resource is a time-frequency resource of a second carrier, and the second carrier is a carrier of a second cell accessed by the second terminal device; and
when utilization of the first time-frequency resource is less than a first threshold and utilization of the second time-frequency resource is greater than a second threshold, reducing, by the network device, a bandwidth of the first time-frequency resource and increasing a bandwidth of the second time-frequency resource.

11. The method according to claim 10, wherein
the first time-frequency resource is a time-frequency resource of a first physical downlink control channel PDCCH, and the second time-frequency resource is a time-frequency resource of a second PDCCH.

12. The method according to claim 11, wherein
the first threshold is determined based on a failure ratio of a first PDCCH control channel element CCE and load of the first PDCCH; and
the second threshold is determined based on a failure ratio of a second PDCCH control channel element CCE and load of the second PDCCH.

13. A communication apparatus, comprising:
a sending unit, configured to send a first signal to a first terminal device in a first frequency band and a second frequency band, wherein a frequency band of a first carrier comprises the first frequency band and the second frequency band, the first frequency band and the second frequency band are contiguous, and the first carrier is a carrier of a first cell accessed by the first terminal device; and
the sending unit is further configured to send a second signal to a second terminal device in a third frequency band, wherein a frequency band of a second carrier comprises the third frequency band and the second frequency band, the second frequency band and the third frequency band are contiguous, a root sequence for generating the first signal is the same as a root sequence for generating the second signal, a slot for sending the first signal is the same as a slot for sending the second signal, and the second carrier is a carrier of a second cell accessed by the second terminal device.

14. The apparatus according to claim 13, wherein
the first signal comprises a channel state information-reference signal CSI-RS or a tracking reference signal TRS; and
the second signal comprises a channel state information-reference signal CSI-RS or a tracking reference signal TRS.

15. A communication apparatus, comprising:
a receiving unit, configured to receive a first signal from a network device in a second frequency band, wherein a frequency band of a first carrier comprises the second frequency band, and the first carrier is a carrier of a first cell accessed by a first terminal device; and
the receiving unit is further configured to receive a second signal from the network device in a third frequency band, wherein a frequency band of a second carrier comprises the second frequency band and the third frequency band, a root sequence for generating the first signal is the same as a root sequence for generating the second signal, the second frequency band and the third frequency band are contiguous, a slot for receiving the first signal is the same as a slot for receiving the second signal, and the second carrier is a carrier of a second cell accessed by a second terminal device.

16. The apparatus according to claim 15, wherein
the first signal comprises a channel state information-reference signal CSI-RS or a tracking reference signal TRS; and
the second signal comprises a channel state information-reference signal CSI-RS or a tracking reference signal TRS.

17. A communication apparatus, comprising:
a sending unit, configured to send a first signal to a first terminal device on a first time-frequency resource, wherein the first time-frequency resource is a time-frequency resource of a first carrier, and the first carrier is a carrier of a first cell accessed by the first terminal device, wherein
the sending unit is further configured to send a second signal to a second terminal device on a second time-frequency resource, wherein the second time-frequency resource is a time-frequency resource of a second carrier, the second carrier is a carrier of a second cell accessed by the second terminal device, and the first time-frequency resource and the second time-frequency resource are different time-frequency resources.

18. The apparatus according to claim 17, wherein
a slot in which the first time-frequency resource is located is different from a slot in which the second time-frequency resource is located.

19. The apparatus according to claim 17, wherein
a frequency domain occupied by the first time-frequency resource is different from a frequency domain occupied by the second time-frequency resource.

20. The apparatus according to claim 19, wherein
a resource element RE occupied by the first time-frequency resource is different from an RE occupied by the second time-frequency resource.

21. The apparatus according to any one of claims 17 to 20, wherein
the first signal comprises a channel state information-reference signal CSI-RS or a tracking reference signal TRS; and
the second signal comprises a channel state information-reference signal CSI-RS or a tracking reference signal TRS.

22. A communication apparatus, comprising:
a sending unit, configured to send a first signal to a first terminal device on a first time-frequency resource, wherein the first time-frequency resource is a time-frequency resource of a first carrier, and the first carrier is a carrier of a first cell accessed by the first terminal device, wherein
the sending unit is further configured to send a second signal to a second terminal device on a second time-frequency resource, wherein the second time-frequency resource is a time-frequency resource of a second carrier, and the second carrier is a carrier of a second cell accessed by the second terminal device; and
a processing unit, configured to: when utilization of the first time-frequency resource is less than a first threshold and utilization of the second time-frequency resource is greater than a second threshold, reduce a bandwidth of the first time-frequency resource and increase a bandwidth of the second time-frequency resource.

23. The apparatus according to claim 22, wherein
the first time-frequency resource is a time-frequency resource of a first physical downlink control channel PDCCH, and the second time-frequency resource is a time-frequency resource of a second PDCCH.

24. The apparatus according to claim 23, wherein
the first threshold is determined based on a failure ratio of a first PDCCH control channel element CCE and load of the first PDCCH; and
the second threshold is determined based on a failure ratio of a second PDCCH control channel element CCE and load of the second PDCCH.

25. A communication device, comprising a processor and a transceiver, wherein the transceiver is configured to: receive computer code or instructions, and transmit the computer code or the instructions to the processor, and the processor runs the computer code or the instructions, to implement the method according to any one of claims 1 to 12.

26. A communication device, comprising an input/output interface and a logic circuit, wherein
the input/output interface is configured to obtain input information and/or output information; and
the logic circuit is configured to perform the method according to any one of claims 1 to 12, to perform processing based on the input information, and/or generate the output information.

27. A communication apparatus, configured to perform the method according to either of claims 1 and 2 or any one of claims 5 to 12.

28. A communication apparatus, configured to perform the method according to claim 3 or 4.

29. A chip, wherein the chip comprises a processor, the processor is connected to a memory, the memory is configured to store a computer program, and the processor is configured to execute the computer program stored in the memory, to enable the method according to any one of claims 1 to 12 to be performed.

30. A chip system, wherein the chip system comprises at least one processor and an interface circuit, the interface circuit and the at least one processor are interconnected through a line, and the processor runs instructions to perform the method according to any one of claims 1 to 12.

31. A communication system, comprising the apparatus according to either of claims 13 and 14 or any one of claims 17 to 24 and the apparatus according to claim 15 or 16.

32. A computer-readable storage medium, wherein
the computer-readable medium stores a computer program; and
when the computer program is run on a computer, the computer is enabled to perform the method according to any one of claims 1 to 12.

33. A computer program product, comprising a computer program, wherein when the computer program is executed, the method according to any one of claims 1 to 12 is implemented.
